# EUROPÄISCHE PATENTANMELDUNG

(11) **EP 4 462 155 A1**
(43) Veröffentlichungstag der Anmeldung: **13.11.2024**
(21) Anmeldenummer: 24174891.2
(22) Anmeldetag: 08.05.2024
(51) Int. Cl.: G01S 7/481, G01S 17/931

(54) **SENSORSCHUTZVORRICHTUNG**

(30) Priorität: 12.05.2023 DE 102023112674
(71) Anmelder: Neumaier Industry GmbH & Co. KG, 77716 Hofstetten (DE)
(72) Erfinder: Neumaier, Bernd, 77716 Hofstetten (DE)
(74) Vertreter: Daub, Thomas

(57) **Zusammenfassung**

Die Erfindung geht aus von einer Sensorschutzvorrichtung für eine Sensoreinheit (12a; 12b), insbesondere eine optische Sensoreinheit, mit einem Sensoraufnahmebereich (20a; 20b), der dazu vorgesehen ist, eine Sensoreinheit (12a; 12b) aufzunehmen, mit einer Gehäuseeinheit (24a; 24b), die den Sensoraufnahmebereich (20a; 20b) zumindest im Wesentlichen umgibt, wobei die Gehäuseeinheit (24a; 24b) zumindest eine Durchtrittsöffnung (34a; 34b) zu einer Kommunikation der Sensoreinheit (12a; 12b) mit einer Umgebung (100a; 100b) begrenzt und dazu in einer Sensorkommunikationsebene (16a; 16b) angeordnet ist, und mit zumindest einer Sensorgebläsevorrichtung (38a; 38b), die dazu vorgesehen ist, einen Fluidstrom (40a; 40b) bereitzustellen.

Es wird vorgeschlagen, dass die Sensorgebläsevorrichtung (38a; 38b) dazu vorgesehen ist, im Bereich der Durchtrittsöffnung (34a; 34b) einen von dem Sensoraufnahmebereich (20a; 20b) weg gerichteten Fluidstrom zu erzeugen.

## Beschreibung

### Stand der Technik

Die Erfindung betrifft eine Sensorschutzvorrichtung nach dem Oberbegriff des Patentanspruchs 1.

Es ist bereits eine Sensorschutzvorrichtung für eine Sensoreinheit, insbesondere eine optische Sensoreinheit, mit einem Sensoraufnahmebereich, der dazu vorgesehen ist, eine Sensoreinheit aufzunehmen, mit einer Gehäuseeinheit, die den Sensoraufnahmebereich zumindest im Wesentlichen umgibt, wobei die Gehäuseeinheit zumindest eine Durchtrittsöffnung zu einer Kommunikation der Sensoreinheit mit einer Umgebung begrenzt und dazu in einer Sensorkommunikationsebene angeordnet ist, und mit zumindest einer Sensorgebläsevorrichtung, die dazu vorgesehen ist, einen Fluidstrom bereitzustellen, vorgeschlagen worden.

Die Aufgabe der Erfindung besteht insbesondere darin, eine gattungsgemäße Vorrichtung mit verbesserten Eigenschaften hinsichtlich einer Schutzwirkung für eine Sensoreinheit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Sensorschutzvorrichtung für eine Sensoreinheit, insbesondere eine optische Sensoreinheit, mit einem Sensoraufnahmebereich, der dazu vorgesehen ist, eine Sensoreinheit aufzunehmen, mit einer Gehäuseeinheit, die den Sensoraufnahmebereich zumindest im Wesentlichen umgibt, wobei die Gehäuseeinheit zumindest eine Durchtrittsöffnung zu einer Kommunikation der Sensoreinheit mit einer Umgebung begrenzt und dazu in einer Sensorkommunikationsebene angeordnet ist, und mit zumindest einer Sensorgebläsevorrichtung, die dazu vorgesehen ist, einen Fluidstrom bereitzustellen.

Es wird vorgeschlagen, dass die Sensorgebläsevorrichtung dazu vorgesehen ist, im Bereich der Durchtrittsöffnung einen von dem Sensoraufnahmebereich weg gerichteten Fluidstrom zu erzeugen. Unter einer "Sensorschutzvorrichtung" soll vorzugsweise eine Vorrichtung für eine Sensoreinheit verstanden werden, die die Sensoreinheit zumindest teilweise von einer Umgebung abtrennt und von äußeren Umwelteinflüssen abschirmt. Die Sensorschutzvorrichtung ist dazu vorgesehen, eine an einem Fahrzeug angebrachte Sensoreinheit vor äußeren Einflüssen zu schützen. Die Sensorschutzvorrichtung ist zu einer Montage an einem Fahrzeug vorgesehen. Die Sensorschutzvorrichtung ist zum Schutz einer an einem Fahrzeug angebrachten Sensoreinheit vorgesehen. Die Sensorschutzvorrichtung und die Sensoreinheit sind dazu vorgesehen, an einer Außenseite des Fahrzeugs montiert zu werden. Vorzugsweise sind die Sensorschutzvorrichtung und die Sensoreinheit an einer Frontseite oder einer Heckseite eines Fahrzeugs angeordnet. Die Sensorschutzvorrichtung und die Sensoreinheit sind vorzugsweise dazu vorgesehen, an einer Seite des Fahrzeugs angeordnet zu sein, die einer Fahrtrichtung des Fahrzeugs zugewandt ist. Die Sensorschutzvorrichtung spannt vorzugsweise einen geschützten Innenraum auf, in dem eine Sensoreinheit angeordnet werden kann. Eine Sensoreinheit ist in einem Sensoraufnahmebereich der Sensorschutzvorrichtung montierbar. Die Sensoreinheit kann in dem Sensoraufnahmebereich direkt an der Sensorschutzvorrichtung montierbar sein. Vorzugsweise ist es ebenso denkbar, dass die Sensoreinheit an einem Fahrzeug direkt montierbar ist. Unter dem Sensoraufnahmebereich der Sensorschutzvorrichtung ist vorzugsweise ein Bereich zu verstehen, in dem eine Sensoreinheit in einem montierten Zustand in dem Innenraum der Sensorschutzvorrichtung angeordnet ist. Der Sensoraufnahmebereich weist eine Sensorebene auf, in der in einem montierten Zustand eine Sensoroberfläche, also vorzugsweise eine Detektionsfläche der Sensoreinheit angeordnet ist. Von einer in dem Sensoraufnahmebereich angeordneten Sensoreinheit eingehende und ausgehende Sensorsignale, also vorzugsweise Lichtwellen, insbesondere Laserstrahlen, sind orthogonal zu der Sensoroberfläche, also orthogonal zu der Sensorebene der Sensorschutzvorrichtung ausgerichtet. Die Sensorebene ist vorzugsweise als eine gekrümmte Ebene ausgebildet, und bildet vorzugsweise einen Teil einer Zylindermantelfläche aus. Grundsätzlich wäre es auch denkbar, dass die Sensorebene als eine gerade Ebene ausgebildet ist. Unter einer "optischen Sensoreinheit" soll vorzugsweise eine Sensoreinheit verstanden werden, die dazu vorgesehen ist, ein optisches Signal, wie insbesondere einen Lichtimpuls zu empfangen und auszuwerten. Vorzugsweise ist die optische Sensoreinheit dazu vorgesehen, einen Lichtimpuls auszusenden und eine Reflexion des Lichtimpulses zu empfangen und auszuwerten. Vorzugsweise ist die optische Sensoreinheit als ein Laserscanner ausgebildet, der dazu vorgesehen ist, während eines Betriebs in einem Detektionsbereich Laserstrahlen als ausgehende Sensorsignale auszusenden und etwaige Reflexionen der Laserstrahlen als eingehende Sensorsignale zu erfassen. Die Sensoreinheit weist vorzugsweise einen Scanwinkel β auf, der einen Detektionsbereich definiert, und in dem die Sensoreinheit Laserimpulse aussendet. Der Scanwinkel β beträgt vorzugsweise zumindest 90 Grad, bevorzugt zumindest 130 Grad und besonders bevorzugt zumindest 180 Grad. Vorzugsweise kann die optische Sensoreinheit als ein LIDAR-Sensor ausgebildet sein.

Unter einer "Gehäuseeinheit" soll eine Einheit verstanden werden, die zumindest eine tragende Struktur der Sensorschutzvorrichtung ausbildet. Vorzugsweise bildet die Gehäuseeinheit eine Außenwandung der Sensorschutzvorrichtung aus. Vorzugsweise ist die Gehäuseeinheit mehrteilig ausgebildet. Vorzugsweise weist die Gehäuseeinheit zumindest einen Grundkörper auf, der die tragende Struktur ausbildet. Vorzugsweise weist die Gehäuseeinheit zumindest ein Gehäuseelement auf, das eine Außenwandung der Sensorschutzvorrichtung ausbildet. Vorzugsweise kann die Gehäuseeinheit mehrere Gehäuseelemente aufweisen, die in einem montierten Zustand fest miteinander verbunden sind. Grundsätzlich ist es auch denkbar, dass die Gehäuseeinheit lediglich ein Gehäuseelement aufweist. Ein Gehäuseelement ist vorzugsweise von einem flächigen Element, vorzugsweise mit einer Kontur, wie beispielsweise von einem Blechelement gebildet. Grundsätzlich ist es auch denkbar, dass ein Gehäuseelement aus einem Kunststoff gebildet ist und beispielsweise als ein Spritzguss oder Tiefziehkunststoffbauteil ausgebildet ist. Beispielsweise kann ein Gehäuseelement als eine Abdeckhaube ausgebildet sein.

Unter einer "Durchtrittsöffnung" soll vorzugsweise eine Öffnung verstanden werden, durch die von einer Sensoreinheit empfangbare Signale von einer Umgebung in einen Innenraum, insbesondere in einen in dem Innenraum angeordneten Sensoraufnahmebereich gelangen können. Ferner können durch die Durchtrittsöffnung von einer in dem Sensoraufnahmebereich angeordneten Sensoreinheit ausgesendete Sensorsignale von dem Sensoraufnahmebereich in eine Umgebung, insbesondere in einen Detektionsbereich der Sensoreinheit austreten. Die Durchtrittsöffnung ist vorzugsweise als ein Schlitz in der Gehäuseeinheit der Sensorvorrichtung ausgebildet. Die Durchtrittsöffnung ist vorzugsweise als ein gekrümmter Schlitz ausgebildet. Grundsätzlich wäre es auch denkbar, dass die Durchtrittsöffnung als ein ebener Schlitz ausgebildet ist. Die Form der Durchtrittsöffnung ist vorzugsweise durch die Form der Gehäuseeinheit und einem Scanwinkel einer zu schützenden Sensoreinheit definiert. Unter einer "Kommunikation der Sensoreinheit mit der Umgebung" soll insbesondere ein Senden und Empfangen von Sensorsignalen, vorzugsweise optischen Signalen, insbesondere von Laserstrahlen von der Sensoreinheit mit einer Umgebung verstanden werden. Darunter, dass die Durchtrittsöffnung zur Kommunikation der Sensoreinheit mit der Umgebung vorgesehen ist, soll verstanden werden, dass von der Sensoreinheit ausgegebene Sensorsignale und von der Sensoreinheit zu empfangende Sensorsignale durch die Durchtrittsöffnung aus dem Innenraum der Sensorschutzvorrichtung insbesondere von dem Sensoraufnahmebereich in die Umgebung strahlen können, bzw. von der Sensoreinheit zu empfangene Sensorsignale durch die Durchtrittsöffnung von der Umgebung, insbesondere aus einem Detektionsbereich in der Umgebung in den Innenraum der Sensorschutzvorrichtung insbesondere in dem Sensoraufnahmebereich strahlen können.

Unter einer "Umgebung" soll vorzugsweise eine unmittelbare Umgebung um die Sensorschutzvorrichtung verstanden werden. In der Umgebung können sich Störelemente, wie beispielsweise Regentropfen, Flüssigkeitsspritzer, aufgewirbelter Staub oder Dreck, oder Blätter befinden, die eine Sensoreinheit, insbesondere eine Detektionsfläche der Sensoreinheit, an einem durch die Umgebung fahrenden Fahrzeug verschmutzen können. Die Sensorschutzvorrichtung ist insbesondere dazu vorgesehen, einen Sensoraufnahmebereich, insbesondere eine in dem Sensoraufnahmebereich angeordnete Sensoreinheit von den in der Umgebung befindlichen Störelementen zu schützen.

Unter einer "Sensorkommunikationsebene" soll vorzugsweise eine Ebene verstanden werden, in der von der Sensoreinheit ausgegebene Sensorsignale, bzw. in der von der Sensoreinheit erfassbare Sensorsignale verlaufen. Ist die Sensoreinheit als ein Laserscanner ausgebildet, entspricht die Sensorkommunikationsebene einer Ebene, in der die als Laserstrahlen ausgebildeten ausgehenden Sensorsignale ausgestrahlt werden. Die Sensorkommunikationsebene ist als eine Detektionsebene ausgebildet, in der die Sensoreinheit Objekte sensieren kann. Unter einer "Sensorgebläsevorrichtung" soll vorzugsweise eine Vorrichtung verstanden werden, die zur Erzeugung eines gerichteten Fluidstroms, insbesondere eines gerichteten Luftstroms vorgesehen ist, um einen Sensoraufnahmebereich, insbesondere eine in einem Sensoraufnahmebereich angeordnete Sensoreinheit vor einer Verschmutzung zu schützen oder Verschmutzungen von einer in dem Sensoraufnahmebereich angeordneten Sensoreinheit zu entfernen.

Unter einem "Fluidstrom" soll ein Strom eines Fluids, insbesondere eines Gases, vorzugsweise einer Luft verstanden werden. Der Fluidstrom ist vorzugsweise von einem Luftstrom gebildet. Der Fluidstrom ist vorzugsweise durch ein von der Umgebung angesaugtes Fluid, also von einer aus der Umgebung angesaugten Luft gebildet. Unter einem "von dem Sensoraufnahmebereich weg gerichteten Fluidstrom" soll vorzugsweise ein Fluidstrom verstanden werden, der eine Hauptströmungsrichtung aufweist, die einen Richtungsvektor aufweist, der von dem Sensoraufnahmebereich, insbesondere der Sensorebene des Sensoraufnahmebereichs weg zeigt. Der Fluidstrom ist als ein Fluidvorhang ausgebildet. Der Fluidstrom erstreckt sich vorzugsweise über eine gesamte Erstreckung der Durchtrittsöffnung. Weist die Durchtrittsöffnung eine gekrümmte Form auf, weist der Fluidstrom in unterschiedlichen Teilbereichen unterschiedliche Richtungsvektoren auf. Vorzugsweise ist der Fluidstrom von der Durchtrittsöffnung weg gerichtet. Grundsätzlich wäre es auch denkbar, dass der Fluidstrom in einem Teilbereich der Durchtrittsöffnung zugewandt ist, wenn eine Düseneinheit in einem Inneren der Gehäuseeinheit, also in einem Bereich zwischen dem Sensoraufnahmebereich und der Durchtrittsöffnung angeordnet ist. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch eine erfindungsgemäße Ausgestaltung kann vorteilhaft eine Sensorschutzvorrichtung bereitgestellt werden, die einen Sensoraufnahmebereich, insbesondere eine in dem Sensoraufnahmebereich angeordnete Sensoreinheit besonders vorteilhaft vor Umwelteinflüssen schützt. Durch die Sensorschutzvorrichtung kann vorteilhaft ein Eindringen von Schmutz, wie beispielsweise Regen, Schnee, oder umherfliegende Blättern in einen Innenraum, insbesondere in einen Sensoraufnahmebereich in dem eine Sensoreinheit angeordnet ist, verhindert werden.

Weiter wird vorgeschlagen, dass der von der Sensorgebläsevorrichtung erzeugte Fluidstrom dazu vorgesehen ist, einen Fluidvorhang auszubilden, der zumindest in einem Teilbereich quer zu der Durchtrittsöffnung verläuft und diese überdeckt. Unter einem "Fluidvorhang" soll vorzugsweise ein im Wesentlicher durchgehender Fluidschleier verstanden werden, wobei der Fluidschleier einen Bereich vorzugsweise in zwei strömungstechnisch voneinander getrennte Bereiche aufteilt. Dadurch kann der Fluidstrom besonders vorteilhaft ausgebildet werden, um ein Eindringen von Störelementen in einen Innenraum der Sensorschutzvorrichtung durch die Durchtrittsöffnung besonders vorteilhaft zu verhindern.

Zudem wird vorgeschlagen, dass die Sensorgebläsevorrichtung dazu vorgesehen ist, zwei Teilfluidströme zu erzeugen, die jeweils dazu vorgesehen sind, einen Teil eines Fluidvorhangs auszubilden, der die Durchtrittsöffnung verschließt. Unter einem "Teilfluidstrom" soll vorzugsweise ein eigenständiger Fluidstrom verstanden werden, der zusammen mit zumindest einem weiteren Teilfluidstrom einen gesamten Fluidstrom ausbildet. Die Teilfluidströme sind vorzugsweise zueinander ausgerichtet. Die Teilfluidströme stehen in einem Winkel β zueinander. Jeder der Teilfluidströme bildet einen eigenständigen Fluidvorhang aus, die zusammen eine geschlossenen Fluidschleier ausbilden. Dadurch kann ein besonders vorteilhafter Fluidvorhang ausgebildet werden, der die Durchtrittsöffnung besonders vorteilhaft verschließt.

Die zwei Teilfluidströme werden durch ihr Aufeinandertreffen vor der Durchtrittsöffnung zu einem gemeinsamen Fluidstrom zusammengefasst. Die beiden Teilfluidströme kombinieren sich in einem Kontaktpunkt, in dem sie aufeinandertreffen, zu dem gemeinsamen Fluidstrom. Der kombinierte, gemeinsame Fluidstrom verläuft vorzugsweise im Wesentlichen parallel zu der Sensorebene. Darunter, dass der kombinierte Fluidstrom zumindest im Wesentlichen parallel zu der Sensorkommunikationsebene verläuft soll vorzugsweise verstanden werden, dass die Hauptströmungsrichtung des Fluidstroms um weniger als 30 Grad, bevorzugt um weniger als 15 Grad, und besonders vorteilhaft um weniger als 5 Grad von der Sensorkommunikationsebene abweicht. In einer besonders bevorzugten Ausgestaltung weicht die Hauptströmungsrichtung des Fluidstroms um weniger als 1 Grad von der Sensorkommunikationsebene ab. In einer besonders vorteilhaften Ausgestaltung verläuft die Hauptströmungsrichtung des Fluidstroms genau parallel zu der Sensorkommunikationsebene.

Weiter wird vorgeschlagen, dass die Sensorgebläsevorrichtung dazu vorgesehen ist, einen Fluidstrom zu erzeugen, der in einem Innenraum der Gehäuseeinheit gegenüber der Umgebung verringerten Druck erzeugt. Die Fluidströme sind dazu vorgesehen, durch ihre Sogwirkung ein Fluid, insbesondere eine Luft aus dem Innenraum des Gehäuses zu saugen und dadurch einen Unterdruck in dem Innenraum der Gehäuseeinheit zu erzeugen. Unter einem "Unterdruck" soll vorzugsweise ein gegenüber der unmittelbaren Umgebung verringerter Druck verstanden werden. Durch den im Vergleich zu der Umgebung verringerten Druck kann eine zusätzliche Strömungskomponente erzeugt werden, die den von der Sensorgebläsevorrichtung bereitgestellten Fluidstrom unterstützt.

Ferner wird vorgeschlagen, dass die Sensorgebläsevorrichtung zumindest eine Düseneinheit aufweist, die auf einer ersten Seite oder einer zweiten Seite der Durchtrittsöffnung angeordnet und von dem Sensoraufnahmebereich weg gerichtet ist. Unter einer "Düseneinheit" soll vorzugsweise eine Einheit verstanden werden, die zumindest ein Düsenelement aufweist, das zu einem gerichteten Ausströmen zumindest eines Teilfluidstroms vorgesehen ist. Die Düseneinheit kann mehrere nebeneinander angeordnete Düsenelemente aufweisen, die jeweils zur Erzeugung eines gerichteten Teilfluidstroms vorgesehen sind, wobei sich die Teilfluidströme zu einem gemeinsamen Fluidstrom der Düseneinheit zusammensetzen. Die einzelnen Düsenelemente der Düseneinheit können dabei jeweils als beabstandet zueinander angeordnete Düsenelemente ausgebildet sein, die einen vorzugsweise gefächerten Fluidstrom ausgeben. Die mehreren Düsenelemente können dabei als punktuelle Düsen ausgebildet sein. Vorzugsweise sind die mehreren Düsenelemente einer Düseneinheit als Düsenelemente ausgebildet, die sich über einen Teil der Quererstreckung der gesamten Düseneinheit erstrecken, also jeweils einen Spalt als Düsenöffnung ausbilden. Dabei wäre es beispielsweise denkbar, dass die Düseneinheit aus zwei Düsenelementen besteht, die sich jeweils über die Hälfte der Quererstreckung der Düseneinheit erstrecken.

Vorzugsweise weist die Düseneinheit lediglich ein Düsenelement auf, das sich über die gesamte Quererstreckung der Düseneinheit erstreckt. Vorzugsweise weist die Düseneinheit lediglich ein längliches Düsenelement auf, das eine als Spalt ausgebildete Düsenöffnung aufweist, die sich über eine gesamte Quererstreckung der Düseneinheit erstreckt. Unter einer "ersten Seite der Durchtrittsöffnung" soll vorzugsweise eine Längsseite, insbesondere eine obere Längsseite der Durchtrittsöffnung verstanden werden, entlang der die Durchtrittsöffnung ihre Haupterstreckung aufweist. Unter einer "zweiten Seite der Durchtrittsöffnung" soll vorzugsweise eine Längsseite, insbesondere eine untere Längsseite der Durchtrittsöffnung verstanden werden, entlang der die Durchtrittsöffnung ihre Haupterstreckung aufweist und die der ersten Seite gegenüberliegt. Darunter, dass die Düseneinheit "von dem Sensoraufnahmebereich weg gerichtet ist" soll vorzugsweise verstanden werden, dass eine Austrittsrichtung, in der ein Fluidstrom aus der Düseneinheit austritt, einen Richtungsvektor aufweist, der von dem Sensoraufnahmebereich weg gerichtet ist. Dadurch kann die Sensorgebläsevorrichtung besonders vorteilhaft zur Erzeugung eines Fluidstroms ausgebildet werden, der den Sensoraufnahmebereich besonders vorteilhaft schützt.

Es wird weiterhin vorgeschlagen, dass die Sensorgebläsevorrichtung zumindest eine weitere Düseneinheit aufweist, die auf einer der ersten Düseneinheit gegenüberliegenden Seite der Durchtrittsöffnung angeordnet und von dem Sensoraufnahmebereich weg gerichtet ist. Unter einer "weiteren Düseneinheit" soll vorzugsweise eine separate Düseneinheit verstanden werden, die zur Erzeugung eines separaten Fluidstroms, der einen Fluidvorhang ausbildet, vorgesehen ist. Die weitere Düseneinheit ist der ersten Düseneinheit gegenüberliegend angeordnet, sodass sich von den Düseneinheiten ausgegebene Fluidströme in einem Kontaktbereich treffen. Dadurch kann die Sensorgebläsevorrichtung besonders vorteilhaft zur Erzeugung eines Fluidstroms ausgebildet werden, der den Sensoraufnahmebereich besonders vorteilhaft schützt.

Des Weiteren wird vorgeschlagen, dass die Sensorgebläsevorrichtung zumindest eine Düseneinheit aufweist, die zumindest dazu vorgesehen ist, einen Fluidstrom zu erzeugen, der sich über einen Großteil, vorzugsweise über eine gesamte Quererstreckung der Durchtrittsöffnung erstreckt. Unter einer "Quererstreckung der Durchtrittsöffnung" soll vorzugsweise eine Erstreckung der Durchtrittsöffnung in einer Querrichtung verstanden werden, die eine Haupterstreckung der Durchtrittsöffnung ausbildet. Darunter, dass sich der Fluidstrom über einen "Großteil der Quererstreckung der Durchtrittsöffnung erstreckt", soll vorzugsweise verstanden werden, dass sich der Fluidstrom zumindest über 90%, bevorzugt über 95% und in einer bevorzugten Ausgestaltung über die gesamte Quererstreckung der Durchtrittsöffnung erstreckt. Dadurch kann mittels der Düseneinheit ein besonders vorteilhafter Fluidstrom zur Erzeugung eines durchgängigen Fluidvorhangs bereitgestellt werden.

Weiterhin wird vorgeschlagen, dass die Sensorgebläsevorrichtung zumindest zwei Düseneinheiten aufweist, die dazu vorgesehen sind, einen Teilfluidstrom zu erzeugen, wobei die Teilfluidströme dazu vorgesehen sind, im Wesentlichen in der Sensorkommunikationsebene aufeinander zu treffen und gemeinsam den im Wesentlichen parallel zur Sensorkommunikationsebene strömenden Fluidstrom zu erzeugen. Dadurch kann ein besonders vorteilhafter Fluidschleier ausgebildet werden, der die Durchtrittsöffnung besonders vorteilhaft gegenüber einer Umgebung abschirmt.

Außerdem wird vorgeschlagen, dass die Sensorgebläsevorrichtung zumindest zwei Düseneinheiten aufweist, die jeweils eine Fluidaustrittsebene aufweisen, die einen Winkel α einschließen, der einen Wert zwischen 10 Grad und 70 Grad, bevorzugt zwischen 20 Grad und 50 Grad aufweist. Besonders bevorzugt weist der Winkel α einen Wert von 30 Grad auf. Unter einer "Fluidaustrittsebene" soll vorzugsweise eine Ebene verstanden werden, in der das Fluid aus der Düseneinheit austritt. Dadurch kann ein besonders vorteilhafter gemeinsamer Fluidvorhang durch die beiden Teilfluidströme erzeugt werden, der die Durchtrittsöffnung besonders vorteilhaft verschließt. Zudem kann dadurch ebenfalls eine besonders vorteilhafte Strömung des Fluidstroms erreicht werden.

Es wird weiter vorgeschlagen, dass die Sensorgebläsevorrichtung zumindest eine Düseneinheit aufweist, die ein als Spalt ausgebildetes Düsenelement aufweist, das sich über einen Großteil, vorzugsweise über eine gesamte Quererstreckung der Durchtrittsöffnung erstreckt. Dadurch kann das Düsenelement der Düseneinheit besonders einfach ausgebildet werden.

Zudem wird vorgeschlagen, dass die Sensorgebläsevorrichtung zumindest eine Düseneinheit aufweist, die ein als Spalt ausgebildetes Düsenelement aufweist, das die Durchtrittsöffnung zu einer Seite begrenzt. Darunter, dass das Düsenelement die Durchtrittsöffnung begrenzt soll vorzugsweise verstanden werden, dass eine Wandung, die das als Spalt ausgebildete Düsenelement begrenzt, ebenfalls eine Begrenzung der Durchtrittsöffnung darstellt. Das Düsenelement ist vorzugsweise teilweise von einer Wandung der Gehäuseeinheit, insbesondere von einer Wandung eines Innengehäuses der Gehäuseeinheit gebildet. Die Wandung des Innengehäuses, die an ihrem einen Ende das Düsenelement teilweise ausbildet, bildet an dem Ende die Begrenzung der Durchtrittsöffnung aus. Dadurch können die Durchtrittsöffnung und das Düsenelement besonders vorteilhaft ausgebildet werden.

Weiter wird vorgeschlagen, dass die Sensorgebläsevorrichtung zwei Düseneinheiten aufweist, die die Durchtrittsöffnung begrenzen. Darunter, dass die Düseneinheiten die Durchtrittsöffnung begrenzen, soll vorzugsweise verstanden werden, dass die jeweilige Wandung der Gehäuseeinheit, insbesondere die jeweilige Wandung des Innengehäuses, die das entsprechende Düsenelement begrenzt, die Durchtrittsöffnung ausbilden. Dadurch kann die Durchtrittsöffnung besonders vorteilhaft ausgebildet werden.

Ferner wird vorgeschlagen, dass die Sensorgebläsevorrichtung zumindest einen Verdichter aufweist, der über einen Fluidkanal strömungstechnisch mit der Düseneinheit verbunden ist. Unter einem "Verdichter" soll vorzugsweise eine Einheit verstanden werden, die dazu vorgesehen ist, ein Fluid aus einer Umgebung anzusaugen, zu verdichten und als einen Verdichterfluidstrom auszugeben. Der Verdichter ist vorzugsweise als ein Gebläse ausgebildet. Vorzugsweise ist der Verdichter als ein Radialverdichter ausgebildet. Grundsätzlich wäre es auch denkbar, dass der Verdichter als ein anderer Verdichter ausgebildet ist, beispielsweise als ein Axialverdichter. Unter einem "Fluidkanal" soll vorzugsweise ein Kanal verstanden werden, der zur Leitung eines Fluids, insbesondere eines Fluidstroms vorgesehen ist. Dadurch kann ein Fluidstrom besonders einfach und vorteilhaft bereitgestellt werden.

Es wird weiterhin vorgeschlagen, dass die Sensorgebläsevorrichtung einen zweiten Verdichter aufweist, der über einen weiteren Fluidkanal strömungstechnisch mit der weiteren Düseneinheit verbunden ist. Dadurch können die beiden Düseneinheiten zur Erzeugung der beiden Fluidströme vorteilhaft separat mit einem Fluid zur Erzeugung des Fluidvorhangs versorgt werden.

Des Weiteren wird vorgeschlagen, dass der zumindest eine Fluidkanal zumindest teilweise von der Gehäuseeinheit ausgebildet ist. Darunter, dass der Fluidkanal teilweise von der Gehäuseeinheit ausgebildet ist, soll verstanden werden, dass der Fluidkanal von Wandungen der Gehäuseeinheit ausgebildet ist. Vorzugsweise ist der Fluidkanal vollständig von der Gehäuseeinheit ausgebildet. Der Fluidkanal ist vorzugsweise einstückig von der Gehäuseeinheit ausgebildet. Dadurch kann der Fluidkanal besonders vorteilhaft ausgebildet werden.

Ferner wird ein System aus einer Sensorschutzvorrichtung mit einem Sensoraufnahmebereich und einer Sensoreinheit, insbesondere einer optischen Sensoreinheit, die in dem Sensoraufnahmebereich angebunden ist, vorgeschlagen. Dadurch kann ein besonders vorteilhaftes System bereitgestellt werden, in dem die Sensoreinheit besonders vorteilhaft vor äußeren Störeinflüssen geschützt ist.

Zudem wird ein Fahrzeug mit einem System aus einer Sensorschutzvorrichtung und einer Sensoreinheit vorgeschlagen. Unter einem "Fahrzeug" soll vorzugsweise ein Fahrzeug verstanden werden, das ein sensorunterstütztes Fahren unterstützt. Vorzugsweise ist das Fahrzeug als ein selbstfahrendes Fahrzeug ausgebildet, das führerlos betrieben werden kann. Vorzugsweise ist das Fahrzeug als ein Transportfahrzeug, oder als ein Reinigungsfahrzeug ausgebildet, das zu einer führerlosen Fortbewegung, beispielsweise auf einem Werksgelände vorgesehen ist.

Die erfindungsgemäße Sensorschutzvorrichtung soll hierbei nicht auf die oben beschriebene Anwendung und Ausführungsform beschränkt sein. Insbesondere kann die erfindungsgemäße Sensorschutzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Seitenansicht eines Fahrzeugs mit einem System aus einer Sensoreinheit und einer erfindungsgemäßen Sensorschutzvorrichtung,
- Fig. 2: eine schematische Draufsicht auf das Fahrzeug mit der Sensoreinheit und der Sensorschutzvorrichtung,
- Fig. 3: eine schematische Ansicht der Sensorschutzvorrichtung einer teilweise demontierten Gehäuseeinheit und mit einer Sensorgebläsevorrichtung,
- Fig. 4: eine schematische Seitenansicht der Sensorschutzvorrichtung mit der Sensorgebläsevorrichtung und der Sensoreinheit,
- Fig. 5: eine schematische Schnittansicht durch die Sensorschutzvorrichtung und die Sensorgebläsevorrichtung und
- Fig. 6: ein zweites Ausführungsbeispiel einer erfindungsgemäßen Sensorschutzvorrichtung mit einer Sensorgebläsevorrichtung, die ein Verdichtermodul aufweist, das lediglich einen Verdichter umfasst.

### Beschreibung der Ausführungsbeispiele

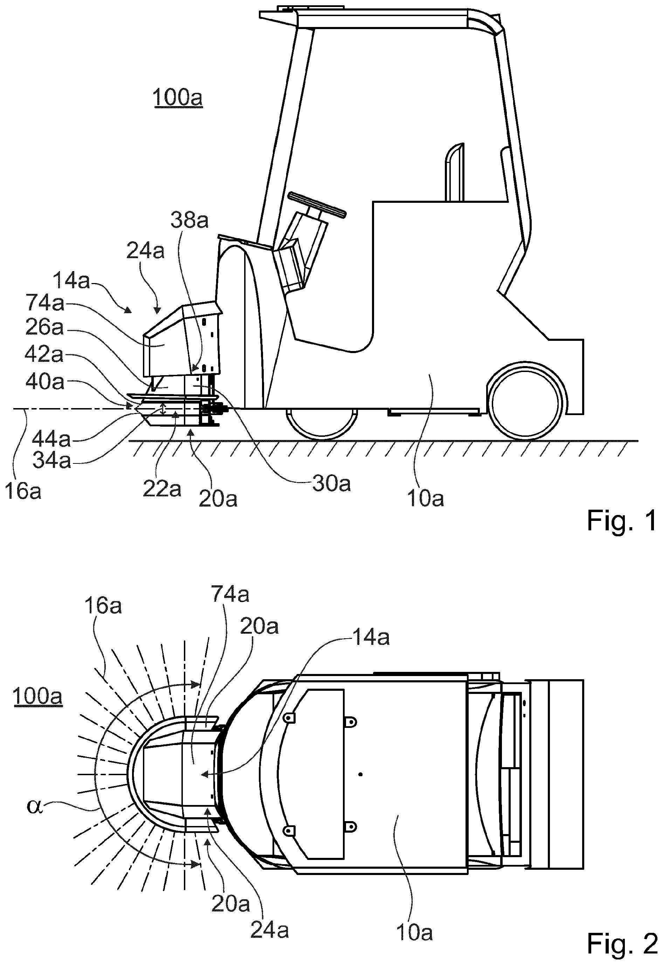

Die Figur 1 zeigt ein Fahrzeug 10a mit einem erfindungsgemäßen System aus einer Sensoreinheit 12a und einer erfindungsgemäßen Sensorschutzvorrichtung 14a. Das Fahrzeug 10a ist als ein zumindest teilautomatisiertes Fahrzeug ausgebildet. Das Fahrzeug 10a ist als ein sensorgestützt operierendes Fahrzeug ausgebildet. Das Fahrzeug 10a ist dazu vorgesehen, Messungen von an dem Fahrzeug 10a angebrachten Sensoreinheiten 12a auszuwerten und entsprechende zumindest teilautomatisierte Vorgänge auszuführen oder Vorgänge zu überwachen. Das Fahrzeug 10a ist beispielhaft als eine Transportzugmaschine ausgebildet, die dazu vorgesehen ist, Transportwaggons fortzubewegen, beispielsweise zu ziehen. Das Fahrzeug 10a ist zu einem vollautomatisierten Fahren vorgesehen. Das Fahrzeug 10a ist insbesondere dazu vorgesehen, beispielsweise auf einem Firmengelände vollautomatisiert zu fahren, um vorzugsweise Güter zu transportieren. Grundsätzlich ist das Fahrzeug 10a auch zu einer Steuerung durch einen Bediener vorgesehen. Grundsätzlich wäre es auch denkbar, dass das Fahrzeug 10a auf eine andere Weise ausgebildet ist. Beispielhaft könnte das Fahrzeug 10a auch als ein vollautomatisiert oder teilautomatisiert fahrendes Reinigungsfahrzeug ausgebildet sein. Die Ausgestaltung der erfindungsgemäßen Sensorschutzvorrichtung 14a ist im Wesentlichen unabhängig von einer Ausgestaltung des Fahrzeugs 10a.

Das Fahrzeug 10a weist eine Frontseite auf. Das Fahrzeug 10a weist die Sensoreinheit 12a auf. Die Sensoreinheit 12a ist beispielhaft an der Frontseite des Fahrzeugs 10a angeordnet. Grundsätzlich wäre es auch denkbar, dass die Sensoreinheit 12a an einer anderen Seite, beispielsweise an einer Rückseite des Fahrzeugs 10a angeordnet ist. Die Sensoreinheit 12a ist als eine optische Sensoreinheit ausgebildet. Die Sensoreinheit 12a ist als ein Laserscanner ausgebildet. Vorzugsweise ist die Sensoreinheit 12a als ein LIDAR-Sensor ausgebildet. Die Sensoreinheit 12a ist dazu vorgesehen, Lichtimpulse, insbesondere Laserstrahlen als Sensorsignale auszusenden und anhand von etwaigen Reflexionen der Lichtimpulse, insbesondere der Laserstrahlen Objekte in einem Detektionsbereich der Sensoreinheit zu erfassen. Der Detektionsbereich ist als der Bereich ausgebildet, in dem die Sensoreinheit 12a Objekte erkennen kann. Die Sensoreinheit 12a weist eine Sensoroberfläche 18a auf. Die Sensoroberfläche 18a bildet eine Oberfläche aus, aus der die als Lichtimpulse, insbesondere die als Laserstrahlen ausgebildeten Sensorsignale ausgesendet bzw. empfangen werden. Die Sensoroberfläche 18a ist vorzugsweise als eine gekrümmte Fläche ausgebildet. Die Sensoroberfläche 18a ist beispielsweise als eine Zylindermantelfläche ausgebildet. Grundsätzlich wäre es auch denkbar, dass die Sensoroberfläche 18a als eine ebene Fläche ausgebildet ist. Die Sensoreinheit 12a weist eine Sensorkommunikationsebene 16a auf. Die Sensorkommunikationsebene 16a ist als eine Ebene ausgebildet, in der die von der Sensoreinheit 12 als Laserstrahlen ausgebildeten Sensorsignale ausgesendet werden. Der Detektionsbereich der Sensoreinheit 12a liegt in der Sensorkommunikationsebene 16a. Die Sensoreinheit 12a ist vorzugsweise so an dem Fahrzeug 10a angeordnet, dass die Sensorkommunikationsebene 16a parallel zu einem Untergrund verläuft. Grundsätzlich ist es auch denkbar, dass die Sensoreinheit 12a gewinkelt an dem Fahrzeug 10a angebunden ist und die Sensorkommunikationsebene 16a schräg zu dem Untergrund verläuft. Die Sensoreinheit 12a ist dazu vorgesehen, den Detektionsbereich zu überwachen und Sensordaten an das Fahrzeug 10a zu übermitteln. Das Fahrzeug 10a kann beispielsweise bei einem durch die Sensoreinheit 12a in dem Detektionsbereich erkannten Objekt eine automatische Bremsung oder eine Lenkung einleiten und/oder einen Warnton ausgeben.

Die erfindungsgemäße Sensorschutzvorrichtung 14a ist dazu vorgesehen, die an dem Fahrzeug 10a angeordnete Sensoreinheit 12a zu schützen. Die erfindungsgemäße Sensorschutzvorrichtung 14a ist insbesondere dazu vorgesehen, die Sensoreinheit 12a von der Umgebung 100a abzuschirmen. Die Sensorschutzvorrichtung 14a ist dazu vorgesehen, die Sensoreinheit 12a vor Umwelteinflüssen, insbesondere vor Schmutz, Regen, herumfliegenden Störelementen, wie beispielsweise Blättern oder Ähnlichem zu schützen. Die Sensorschutzvorrichtung 14a ist an dem Fahrzeug 10a montiert. Die Sensorschutzvorrichtung 14a ist dazu vorgesehen, die Sensoreinheit 12a zumindest im Wesentlichen zu umgeben. Die Sensorschutzvorrichtung 14a umgibt die Sensoreinheit 12a zu einem Großteil, wobei ein Bereich in dem Detektionsbereich der Sensoreinheit 12a freigelassen ist. Die Sensorschutzvorrichtung 14a umgibt die Sensoreinheit 12a abgesehen von in dem Detektionsbereich der Sensoreinheit 12a vorzugsweise vollständig. Die Sensorschutzvorrichtung 14a ist in der Sensorkommunikationsebene 16a und einer Sensierungsrichtung der Sensoreinheit 12a geöffnet.

Die Sensorschutzvorrichtung 14a weist einen Innenraum 22a auf. Der Innenraum 22a der Sensorschutzvorrichtung 14a ist gegenüber der Umgebung 100a zumindest teilweise abgetrennt. Die Sensorschutzvorrichtung 14a weist einen Sensoraufnahmebereich 20a auf. Der Sensoraufnahmebereich 20a ist in dem Innenraum 22a der Sensorschutzvorrichtung 14a angeordnet. Der Sensoraufnahmebereich 20a ist als ein Bereich ausgebildet, in dem der die Sensoreinheit 12a angeordnet ist. Der Sensoraufnahmeberiech 20a weist eine Sensorebene 36a auf. Die Sensoreinheit 12a ist mit ihrer Sensoroberfläche in der Sensorebene 36a angeordnet. Die Sensoreinheit 12a ist in der Sensorschutzvorrichtung 14a montiert. Grundsätzlich wäre es auch denkbar, dass die Sensoreinheit 12a an dem Fahrzeug 10a direkt montiert ist.

Die Sensorschutzvorrichtung 14a weist eine Gehäuseeinheit 24a auf. Die Gehäuseeinheit 24a bildet eine Grundstruktur der Sensorschutzvorrichtung 14a aus. Die Gehäuseeinheit 24a bildet den Innenraum 22a der Sensorschutzvorrichtung 14a aus. Die Gehäuseeinheit 24a definiert den Innenraum 22a. Die Gehäuseeinheit 24a begrenzt den Innenraum 22a der Sensorschutzvorrichtung 14a. Die Gehäuseeinheit 24a ist vorzugsweise mehrteilig ausgebildet. Die Gehäuseeinheit 24a weist einen Grundkörper 26a auf. Der Grundkörper 26a bildet eine tragende Grundstruktur der Sensorvorrichtung 14a aus. Der Grundkörper 26a bildet eine Montagegrundstruktur der Sensorschutzvorrichtung 14a aus. Der Grundkörper 26a ist im Wesentlichen kastenförmig ausgebildet. Der Grundkörper 26a ist als ein Hohlkörper ausgebildet. Der Grundkörper 26a als ein Hohlkörper aus dünnwandigen Wandelementen gebildet. Der Grundkörper 26a ist vorzugweise aus einem geformten Blechelement gebildet. Der Grundkörper 26a ist vorzugsweise aus miteinander verbundenen, vorzugsweise miteinander verschweißten Blechelementen gebildet. Grundsätzlich wäre es auch denkbar, dass der Grundkörper 26a wenigstens teilweise aus einem Kunststoff hergestellt ist. Beispielsweise wäre es denkbar, dass der Grundkörper 26a von miteinander verbundenen Tiefzieh- oder Spritzgussbauteilen aus einem Kunststoff gebildet ist. Grundsätzlich ist es auch denkbar, dass der Grundkörper 26a aus einem Faserverbundwerkstoff gebildet ist. Der Grundkörper 26a bildet den Innenraum 22a aus. Der Grundkörper 26a weist ein Innengehäuse 28a auf. Das Innengehäuse 28a begrenzt den Innenraum 22a. Das Innengehäuse 28a ist zu einer Unterseite und einer Rückseite hin im Wesentlichen geschlossen ausgebildet. Der Grundköper 24a bildet ein Außengehäuse 30a aus. Das Außengehäuse 30a schließt das Innengehäuse 28a ein. Das Außengehäuse 30a schließt den Grundkörper 26a nach außen hin ab. Die Gehäuseeinheit 24a weist beispielhaft eine halbrunde Form auf. Die Gehäuseeinheit 24a ist vorzugsweise mehrteilig ausgebildet, sodass die Sensoreinheit 12a vorteilhaft einfach in dem Sensoraufnahmebereich 20a in dem Innenraum 22a montierbar ist. Das Außengehäuse 30a bildet eine untere Außenwandung aus, die die Gehäuseeinheit 24a nach unten hin abschließt.

Der Sensoraufnahmebereich 20a ist innerhalb des Innengehäuses 28 des Grundkörpers 26a der Gehäuseeinheit 24a angeordnet. Die Gehäuseeinheit 24a weist eine Anbindungseinheit 32a auf, über die die Sensoreinheit 12a an dem Grundkörper 26a montierbar ist. Die Anbindungseinheit 32a ist an dem Innengehäuse 28a angebunden. Über die Anbindungseinheit 32a ist die Sensoreinheit kraft- und/oder formschlüssig mit dem Grundkörper 26a, insbesondere mit dem Innengehäuse 28a verbindbar. Beispielsweise könnte die Anbindungseinheit 32a durch Schraubenverbindungen gebildet sein.

Die Sensorschutzvorrichtung 14a weist eine Durchtrittsöffnung 34a auf. Die Durchtrittsöffnung 34a ist zu einer Kommunikation der Sensoreinheit 12a mit der Umgebung 100a vorgesehen. Durch die Durchtrittsöffnung 34a können von der in dem Sensoraufnahmebereich 20a angeordneten Sensoreinheit 12a ausgegebene als Laserstrahlen ausgegebene Sensorsignale aus dem Innenraum 22a der Sensorschutzvorrichtung 14a austreten. Durch die Durchtrittsöffnung 34a können ebenso Sensorsignale, insbesondere reflektierte Sensorsignale aus der Umgebung 100a in den Innenraum 22a der Sensorschutzvorrichtung 14a zu der in dem Sensoraufnahmebereich 20a angeordneten Sensoreinheit 12a gelangen. Die Sensorschutzvorrichtung 14a ist im Bereich der Durchtrittsöffnung 34a geöffnet.

Die Durchtrittsöffnung 34a ist durch die Gehäuseeinheit 24a begrenzt. Die Durchtrittsöffnung 34a ist von dem Grundkörper 26a ausgebildet. Die Durchtrittsöffnung 34a ist als ein Schlitz in dem Grundkörper 26a ausgebildet. Der Grundkörper 26a begrenzt die als länglicher Schlitz ausgebildete Durchtrittsöffnung 34a. Die Durchtrittsöffnung 34a weist einen teilkreisförmigen Verlauf auf. Die Durchtrittsöffnung 34a ist in der Sensorkommunikationsebene 16a angeordnet.

Die Sensorschutzvorrichtung 14a weist eine Sensorgebläsevorrichtung 38a auf. Die Sensorgebläsevorrichtung 38a ist dazu vorgesehen, wenigstens einen Fluidstrom 40a bereitzustellen. Die Sensorgebläsevorrichtung 38a ist dazu vorgesehen, im Bereich der Durchtrittsöffnung 34a einen von dem Sensoraufnahmebereich 20a weg gerichteten Fluidstrom 40a zu erzeugen. Der Fluidstrom 40a ist als ein Luftstrom ausgebildet. Die Sensorgebläsevorrichtung 38a ist dazu vorgesehen, den Fluidstrom 40a bereitzustellen, der den Innenraum 22a, insbesondere den Sensoraufnahmebereich 20 der Sensorschutzvorrichtung 14a im Bereich der Durchtrittsöffnung 34a von der Umgebung 100a abschirmt. Der von der Sensorgebläsevorrichtung 38a bereitgestellte Fluidstrom 40a ist von dem Innenraum 22a und der Durchtrittsöffnung 34a der Sensorschutzvorrichtung 14a weg gerichtet. Der von der Sensorgebläsevorrichtung 38a bereitgestellte Fluidstrom 40a ist dazu vorgesehen, den Innenraum 22a, insbesondere den Sensoraufnahmebereich 20a der Sensorschutzvorrichtung 14a strömungstechnisch von der Umgebung 100a zu trennen. Der von der Sensorgebläsevorrichtung 38a bereitgestellte Fluidstrom 40a ist dazu vorgesehen, einen Fluidvorhang, insbesondere einen Luftvorhang auszubilden, der die Durchtrittsöffnung 34a verschließt. Der durch den Fluidstrom 40a ausgebildete Fluidvorhang verläuft in einem Teilbereich quer zu der Durchtrittsöffnung 34a der Sensorschutzvorrichtung 14a. Der durch den Fluidstrom 40a ausgebildete Fluidvorhang überdeckt die Durchtrittsöffnung 34a über ihre gesamte Quererstreckung. Der durch den Fluidstrom 40a ausgebildete Fluidvorhang trennt den Innenraum 22a, insbesondere den Sensoraufnahmebereich 20a der Sensorschutzvorrichtung 14a strömungstechnisch von der Umgebung 100a außerhalb des Fluidstroms 40a ab. Der Fluidstrom 40a verläuft vorzugsweise außerhalb der Gehäuseeinheit 24a vor der Durchtrittsöffnung 34a.

Der Fluidstrom 40a, der einen Fluidvorhang ausbildet, verschließt die Durchtrittsöffnung 34a zwischen der Umgebung 100a und dem Innenraum 22a der Sensorschutzvorrichtung 14a. Der Fluidstrom 40a ist dazu vorgesehen, ein Eindringen von Störelementen, wie beispielsweise Verschmutzung, Regentropfen, Schnee oder Staub aus der Umgebung 100a durch die Durchtrittsöffnung 34a in den Innenraum 22a, insbesondere in den Sensoraufnahmebereich 20a der Sensorschutzvorrichtung 14a zu verhindern. Der Fluidstrom 40 ist dazu vorgesehen, Störelemente aus dem Innenraum 22a, insbesondere in den Sensoraufnahmebereich 20a der Sensorschutzvorrichtung 14a fernzuhalten. Der von der Sensorgebläsevorrichtung 40a bereitgestellte Luftstrom ist dazu vorgesehen, Störelemente aus dem Bereich unmittelbar vor der Durchtrittsöffnung 34a zu entfernen, insbesondere wegzublasen.

Die Sensorgebläsevorrichtung 38a ist dazu vorgesehen, zwei Teilfluidströme 42a, 44a zu erzeugen. Die Teilfluidströme 42a, 44a sind jeweils dazu vorgesehen, einen Teil des von dem Fluidstrom 40a ausgebildeten Fluidvorhangs auszubilden, der die Durchtrittsöffnung 34a verschließt. Die Teilfluidströme 42a, 44a bilden den Fluidvorhang aus, der den Innenraum 22a, insbesondere in den Sensoraufnahmebereich 20a der Sensorschutzvorrichtung 14a strömungstechnisch von der Umgebung 100a abtrennt. Die zwei Teilfluidströme 42a, 44a gehen von zwei gegenüberliegenden Seiten der Durchtrittsöffnung aus. Die zwei Teilfluidströme 42a, 44a strömen von zwei gegenüberliegenden Seiten der Durchtrittsöffnung 34a in einen Bereich vor der Durchtrittsöffnung 34a. Der erste Teilfluidstrom 42a tritt auf einer ersten Seite der Durchtrittsöffnung 34a aus der Gehäuseeinheit 24a aus. Der erste Teilfluidstrom 42a tritt oberhalb der Durchtrittsöffnung 34a aus der Gehäuseeinheit 24a aus. Der zweite Teilfluidstrom 44a tritt auf einer zweiten Seite der Durchtrittsöffnung 34a aus der Gehäuseeinheit 24a aus. Der zweite Teilfluidstrom 44a tritt unterhalb der Durchtrittsöffnung 34a aus der Gehäuseeinheit 24a aus. Die beiden Teilfluidströme 42a, 44a sind aufeinander zu ausgerichtet. Die Teilfluidströme 42a, 44a sind dazu vorgesehen, in einem Bereich außerhalb der Gehäuseeinheit 24a vor der Durchtrittsöffnung 34a aufeinander zu treffen. Die beiden Teilfluidströme 42a, 44a sind dazu vorgesehen, in einem Kontaktbereich vor der Durchtrittsöffnung 34a aufeinander zu treffen und sich zu einem gemeinsamen Fluidstrom zu verbinden. Der Kontaktbereich, in dem die beiden Teilfluidströme 42a, 44a aufeinander treffen, ist vorzugsweise in der Sensorkommunikationsebene 16a angeordnet. In dem Kontaktbereich treffen die Teilfluidströme 42a, 44a aufeinander und bilden einen gemeinsamen Fluidstrom aus, der im Wesentlichen in der Sensorkommunikationsebene 16a oder im Wesentlichen parallel zu der Sensorkommunikationsebene 16a verläuft.

Der von der Sensorgebläsevorrichtung 38a erzeugte Fluidstrom 40a ist dazu vorgesehen, in dem Innenraum 22a der Gehäuseeinheit 24a einen gegenüber der Umgebung 100a verringerten Druck zu erzeugen. Der Fluidstrom 40a ist dazu vorgesehen, in dem Innenraum 22a der Gehäuseeinheit 24a einen gegenüber dem Umgebungsdruck verringerten Luftdruck zu erzeugen. Die beiden Teilfluidströme 42a, 44a, die den Fluidstrom 40a ausbilden, sind dazu vorgesehen, den gegenüber dem Umgebungsdruck verringerten Luftdruck in dem Innenraum 22a der Gehäuseeinheit 24a zu erzeugen. Die Teilfluidströme 42a, 44a erzeugen durch ihre Sogwirkung einen aus dem Innenraum 22a durch die Durchtrittsöffnung 34a strömenden zusätzlichen Fluidstrom 80a. Die im Bereich der Durchtrittsöffnung 34a von dem Innenraum 22a weg strömenden Teilfluidströme 42a, 44a erzeugen durch die Fluidreibung eine Fluidströmung aus dem Innenraum 22a der Gehäuseeinheit 24a heraus. Dadurch entsteht der gegenüber dem Umgebungsdruck verringerte Innendruck in dem Innenraum 22a, da ein Fluid durch die Teilfluidströme 42a, 44a aus dem Innenraum 22a herausgesogen wird.

Die Sensorgebläsevorrichtung 38a weist eine erste Düseneinheit 46a auf. Die erste Düseneinheit 46a ist zur Erzeugung des Fluidstroms 40a, vorgesehen. Die erste Düseneinheit 46a ist von dem Sensoraufnahmebereich 20a weg gerichtet. Die erste Düseneinheit 46a ist zur Erzeugung des ersten Teilfluidstroms 42a vorgesehen. Die erste Düseneinheit 46a ist auf der ersten Seite der Durchtrittsöffnung 34a an der Gehäuseeinheit 24 angeordnet. Die erste Düseneinheit 46a ist zur Erzeugung des Teilfluidstroms 42a vorgesehen, der einen oberen Fluidvorhang ausbildet. Die erste Düseneinheit 46a ist von dem Sensoraufnahmebereich 20a weg gerichtet. Die erste Düseneinheit 46a ist der Sensorkommunikationsebene 16a zugewandt. Die erste Düseneinheit 46a ist dazu vorgesehen, den Teilfluidstrom 42a zu erzeugen, der sich über die gesamte Quererstreckung der Durchtrittsöffnung 34a erstreckt.

Die erste Düseneinheit 46a weist ein Düsenelement 48a auf. Das Düsenelement 48a erstreckt sich über eine gesamte Quererstreckung der Durchtrittsöffnung 34a. Das Düsenelement 48a ist als ein Spalt ausgebildet. Das Düsenelement 48a weist eine Düsenausgangsöffnung 50a auf. Die Düsenausgangsöffnung 50a des Düsenelements 48a erstreckt sich über eine gesamte Quererstreckung der Durchtrittsöffnung 34a. Das Düsenelement 48a bildet eine Fluidaustrittsebene 52a aus, in der das Fluid, insbesondere die Luft aus dem Düsenelement 48a austritt. Die Fluidaustrittsebene 52a definiert die Ausrichtung des von der ersten Düseneinheit 46a erzeugten Teilfluidstroms 42a. Der Teilfluidstrom 42a tritt in der Fluidaustrittsebene 52a aus dem Düsenelement 48a aus. Das als Spalt ausgebildete Düsenelement 48a begrenzt die Durchtrittsöffnung 34a zu der ersten Seite. Das Düsenelement 48a bildet eine obere Seitenkante der Durchtrittsöffnung 34a aus. Das Düsenelement 48a ist von der Gehäuseeinheit 24a ausgebildet. Das Düsenelement 48a ist von einer Wandung des Innengehäuses 28a und einer Wandung des Außengehäuses 30a definiert. Das Düsenelement 48a ist von einem Spalt zwischen der Wandung des Innengehäuses 28a und der Wandung des Außengehäuses 30a gebildet.

Die Sensorgebläsevorrichtung 38a weist eine weitere Düseneinheit 54a auf. Die zweite Düseneinheit 54a ist zur Erzeugung des Fluidstroms 40a vorgesehen. Die zweite Düseneinheit 54a ist von dem Sensoraufnahmebereich 20a weg gerichtet. Die zweite Düseneinheit 54a ist zur Erzeugung des zweiten Teilfluidstroms 44a vorgesehen. Die zweite Düseneinheit 54a ist auf der zweiten Seite der Durchtrittsöffnung 34a an der Gehäuseeinheit 24a angeordnet. Die zweite Düseneinheit 54a ist zur Erzeugung des Teilfluidstroms 44a vorgesehen, der einen unteren Fluidvorhang ausbildet. Die zweite Düseneinheit 54a ist von dem Sensoraufnahmebereich 20a weg gerichtet. Die Düseneinheit 54a ist der Sensorkommunikationsebene 16a zugewandt. Die zweite Düseneinheit 56a ist dazu vorgesehen, den Teilfluidstrom 44a zu erzeugen, der sich über die gesamte Quererstreckung der Durchtrittsöffnung 34a erstreckt.

Die zweite Düseneinheit 54a weist ein Düsenelement 56a auf. Das Düsenelement 56a erstreckt sich über eine gesamte Quererstreckung der Durchtrittsöffnung 34a. Das Düsenelement 56a ist als ein Spalt ausgebildet. Das Düsenelement 56a weist eine Düsenausgangsöffnung 58a auf. Die Düsenausgangsöffnung 58a des Düsenelements 56a erstreckt sich über eine gesamte Quererstreckung der Durchtrittsöffnung 34a. Das Düsenelement 56a bildet eine Fluidaustrittsebene 60a aus, in der das Fluid, insbesondere die Luft aus dem Düsenelement 56a austritt. Die Fluidaustrittsebene 60a definiert die Ausrichtung des von der Düseneinheit 54a erzeugten Teilfluidstroms 44a. Der Teilfluidstrom 44a tritt in der Fluidaustrittsebene 60a aus dem Düsenelement 56a aus. Das als Spalt ausgebildete Düsenelement 56a begrenzt die Durchtrittsöffnung 34a zu der zweiten Seite. Das Düsenelement 56a bildet eine untere Seitenkante der Durchtrittsöffnung 34a aus. Das Düsenelement 56a ist von der Gehäuseeinheit 24a ausgebildet. Das Düsenelement 56a ist von einer Wandung des Innengehäuses 28a und einer Wandung des Außengehäuses 30a definiert. Das Düsenelement 56a ist von einem Spalt zwischen der Wandung des Innengehäuses 28a und der Wandung des Außengehäuses 30a gebildet. Die beiden Düseneinheiten 46a, 54a, insbesondere die Düsenelemente 48a, 56a der Düseneinheiten 46, 54a begrenzen die Durchtrittsöffnung 34a beidseitig.

Die zwei Düseneinheiten 46a, 54a sind gewinkelt zueinander ausgerichtet. Die Fluidaustrittsebenen 52a, 60a der Düseneinheiten 46a, 54a schließen einen Winkel α von 30 Grad miteinander ein. Durch die gewinkelt zueinander ausgerichteten Düseneinheiten 46a, 54a können die erzeugten Teilfluidströme 42a, 44a besonders vorteilhaft zueinander ausgerichtet werden. Die Teilfluidströme 42a, 44a sind vorteilhaft in dem Winkel α von 30 Grad zueinander ausgerichtet. Die Teilfluidströme 42a, 44a treffen in dem Winkel α aufeinander. Durch das Aufeinandertreffen der Teilfluidströme 42a, 44a in dem Winkel α können diese einen besondere vorteilhaften Fluidschleier ausbilden, der die Durchtrittsöffnung 34a besonders gut abschirmt. Ferner können die beiden Teilfluidströme 42a, 44a durch das Aufeinandertreffen in dem Winkel α besonders gut zu einem gemeinsamen Fluidstrom 40a kombiniert werden.

Die Sensorgebläsevorrichtung 38a weist ein Verdichtermodul 62a auf. Das Verdichtermodul 62a ist zur Erzeugung des Fluidstroms 40a vorgesehen. Das Verdichtermodul 62a weist einen ersten Verdichter 64a auf. Der erste Verdichter 64a ist als ein Gebläse ausgebildet. Der erste Verdichter 62a ist als ein Radialverdichter ausgebildet. Der erste Verdichter 64a weist einen Einlass auf, der strömungstechnisch mit der Umgebung 100a verbunden ist. Über den Einlass kann ein Fluid, insbesondere eine Umgebungsluft in den ersten Verdichter 64a eingesaugt werden. Der erste Verdichter 64a weist einen Auslass auf. Durch den Auslass wird ein Verdichterfluidstrom aus dem ersten Verdichter 64a ausgegeben. Der erste Verdichter 64a weist ein Verdichterrad auf. Das Verdichterrad ist durch Bewegung, insbesondere durch eine Rotation dazu vorgesehen, den Verdichterfluidstrom zu erzeugen und aus dem Auslass auszudrücken. Der erste Verdichter 64a weist eine nicht näher dargestellte Motoreinheit auf, die dazu vorgesehen ist, das Verdichterrad des ersten Verdichters 64a anzutreiben. Der erste Verdichter 64a ist zur Erzeugung des ersten Teilfluidstroms 42a vorgesehen. Der erste Verdichter 64a ist zur Versorgung der ersten Düseneinheit 46a mit einem Fluidstrom vorgesehen. Der erste Verdichter 64a ist strömungstechnisch mit dem Düsenelement 48a der ersten Düseneinheit 46a verbunden. Die Sensorgebläsevorrichtung 38a weist einen ersten Fluidkanal 66a auf. Das Düsenelement 48a der ersten Düseneinheit 46a ist über den ersten Fluidkanal 66a strömungstechnisch mit dem ersten Verdichter 64a verbunden. Der erste Fluidkanal 66a ist von der Gehäuseeinheit 24a gebildet. Der erste Fluidkanal 66a ist einstückig mit der Gehäuseeinheit 24a ausgebildet. Der erste Fluidkanal 66a ist zwischen dem Innengehäuse 28a und dem Außengehäuse 30a der Gehäuseeinheit 24a angeordnet. Der erste Fluidkanal 66a wird von einer Wandung der Innengehäuses 28a und einer Wandung des Außengehäuses 30a begrenzt. Der erste Fluidkanal 66a verläuft in einem Bereich vor dem Sensoraufnahmebereich 20a von dem ersten Verdichter 64a zu der ersten Düseneinheit 46a. Der Auslass des ersten Verdichters 64a ist an dem ersten Fluidkanal 66a angebunden. An einem dem ersten Verdichter 64a entgegengesetzten Ende des ersten Fluidkanals 66a ist die erste Düseneinheit 46a, insbesondere das Düsenelement 48a der ersten Düseneinheit 46a angeordnet. Vorzugsweise ist das Düsenelement 48a der ersten Düseneinheit 46a von einem Ende des ersten Fluidkanals 66a ausgebildet.

Das Verdichtermodul 62a weist einen zweiten Verdichter 68a auf. Der zweite Verdichter 68a ist als ein Gebläse ausgebildet. Der zweite Verdichter 68a ist vorzugsweise im Aufbau gleich ausgebildet wie der erste Verdichter 64a. Der zweite Verdichter 68a ist als ein Radialverdichter ausgebildet. Der zweite Verdichter 68a weist einen Einlass auf, der strömungstechnisch mit der Umgebung 100a verbunden ist. Der zweite Verdichter 68a weist einen Auslass auf. Durch den Auslass wird ein Verdichterfluidstrom aus dem zweiten Verdichter 68a ausgegeben. Der zweite Verdichter 68a weist ein Verdichterrad auf. Der zweite Verdichter 68a weist eine nicht näher dargestellte Motoreinheit auf, die dazu vorgesehen ist, das Verdichterrad des zweiten Verdichters 68a anzutreiben. Der zweite Verdichter 68a ist zur Erzeugung des zweiten Teilfluidstroms 44a vorgesehen. Der zweite Verdichter 68a ist zur Versorgung der zweiten Düseneinheit 54a mit einem Fluidstrom vorgesehen. Der zweite Verdichter 68a ist strömungstechnisch mit dem Düsenelement 56a der zweiten Düseneinheit 54a verbunden. Die Sensorgebläsevorrichtung 38a weist einen zweiten Fluidkanal 70a auf. Das Düsenelement 56a der zweiten Düseneinheit 54a ist über den zweiten Fluidkanal 70a strömungstechnisch mit dem zweiten Verdichter 68a verbunden. Der zweite Fluidkanal 70a ist von der Gehäuseeinheit 24a gebildet. Der Fluidkanal 70a ist einstückig mit der Gehäuseeinheit 24a ausgebildet. Der zweite Fluidkanal 70a ist zwischen dem Innengehäuse 28a und dem Außengehäuse 30a der Gehäuseeinheit 24a angeordnet. Der zweite Fluidkanal 70a wird von einer Wandung der Innengehäuses 28a und einer Wandung des Außengehäuses 30a begrenzt. Der zweite Fluidkanal 70a verläuft in einem Bereich hinter und unterhalb des Sensoraufnahmebereichs 20a von dem zweiten Verdichter 68a zu der zweiten Düseneinheit 54a. Der Auslass des zweiten Verdichters 68a ist an dem zweiten Fluidkanal 70a angebunden. An einem dem zweiten Verdichter 68a entgegengesetzten Ende des zweiten Fluidkanals 70a ist die zweite Düseneinheit 54a, insbesondere das Düsenelement 56a der zweiten Düseneinheit 54a angeordnet. Vorzugsweise ist das Düsenelement 56a der zweiten Düseneinheit 54a von einem Ende des zweiten Fluidkanals 70a ausgebildet.

Die Verdichter 64a, 68a des Verdichtermoduls 62a sind an der Gehäuseeinheit 24a montiert. Die Verdichter 64a, 68a sind jeweils an dem Grundkörper 26a der Gehäuseeinheit montiert. Die Verdichter 64a, 68a sind an dem Außengehäuse 30a des Grundkörpers 26a angebunden, vorzugsweise verschraubt. Die Verdichter 64a, 68a sind auf einer Oberseite des Außengehäuses 30a des Grundkörpers 26a ferst montiert.

Die Sensorschutzvorrichtung 14a weist eine nicht näher dargestellte Steuereinheit auf, die zur Ansteuerung der Verdichter 64a, 68a vorgesehen ist. Die Steuereinheit ist dazu vorgesehen, die Motoreinheit der Verdichter 64a, 68a anzusteuern. Die Verdichter sind mittels der Steuereinheit in unterschiedlichen Geschwindigkeitsstufen betreibbar. Vorzugsweise sind die Verdichter 64a, 68a jeweils in zumindest zwei, vorzugsweise zumindest drei Geschwindigkeitsstufen antreibbar, in denen die Verdichter 64a, 68a jeweils einen unterschiedlich großen Volumenstrom fördern. In den unterschiedlichen Geschwindigkeitsstufen fördern die Verdichter 64a, 68a unterschiedlich starke Verdichterfluidströme. Die Verdichter 64a, 68a sind unabhängig voneinander betreibbar.

Die Verdichter 64a, 68a sind unabhängig voneinander von der Steuereinheit in einer entsprechenden Geschwindigkeitsstufe betreibbar. Die Verdichter 64a, 68a können dabei in einer gleichen Geschwindigkeitsstufe betrieben werden oder in jeweils unterschiedlichen Geschwindigkeitsstufen. Dadurch dass die Verdichter 64a, 68a unabhängig voneinander in verschiedenen Geschwindigkeitsstufen betreibbar sind, kann ein von den jeweiligen Düseneinheiten 46a, 54a ausgegebener Teilfluidstrom besonders vorteilhaft eingestellt werden und insbesondere auf unterschiedliche Umwelteinflüsse eingestellt werden. Durch den Betrieb der Verdichter 64a, 68a in unterschiedlichen Geschwindigkeitsstufen können unterschiedlich starke Teilfluidströme 42a, 44a, bereitgestellt werden.

Der Innenraum 22a der Gehäuseeinheit 24a ist zumindest zu einem Großteil nach außen abgeschlossen. Der von dem Innengehäuse 28a begrenzte Innenraum 22a ist im Wesentlichen zu der Umgebung 100a geschlossen. Der Innenraum 22a ist durch die Durchtrittsöffnung 34a zu der Umgebung 100a hin geöffnet. Durch die an der Durchtrittsöffnung 34a in einem Betrieb strömenden Teilfluidströme 42a, 44a wird Fluid, also eine Luft aus dem Innenraum 22a angesogen, wodurch in dem Innenraum 22a ein gegenüber dem Umgebungsdruck in der unmittelbaren Umgebung 100a verringerter Innendruck entsteht. Die Gehäuseeinheit 24a weist eine zusätzliche Strömungsausnehmung 72a auf. Die zusätzliche Strömungsausnehmung 72a ist dazu vorgesehen, dass aus einer Umgebung 100a ein Fluid, insbesondere eine Luft in den Innenraum 22a nachströmen kann. Durch den im Betrieb durch den Fluidstrom 40a, insbesondere die Teilfluidströme 42a, 44a in dem Innenraum 22a erzeugten Unterdruck, wird ein Fluid, insbesondere eine Luft durch die zusätzliche Strömungsausnehmung 72a aus der Umgebung 100a in den Innenraum 22a gedrückt. Dadurch entsteht der zusätzliche aus dem Innenraum 22a strömender Fluidstrom 80a, der die von den Düseneinheiten 46a, 54a ausgegebenen Teilfluidströme 42a, 44a verstärkt.

Die Gehäuseeinheit 24a weist eine Abdeckhaube 74a auf. Die Abdeckhaube 74a ist dazu vorgesehen, mit dem Grundkörper 26a verbunden zu werden. Die Abdeckhaube 74a bildet in einem montierten Zustand eine obere Wandung der Sensorschutzvorrichtung 14a aus. Die Abdeckhaube 74a überdeckt und schützt die Verdichter 64a, 68a des Verdichtermoduls 62a in einem montierten Zustand.

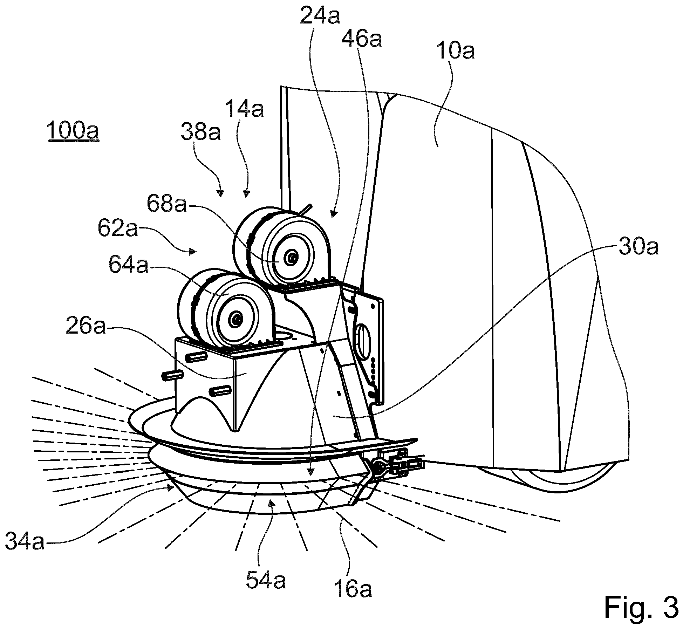

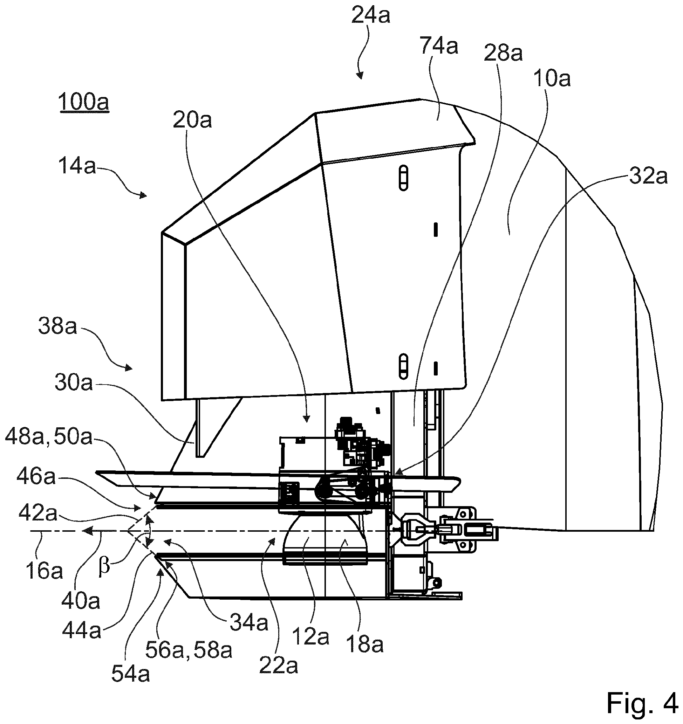

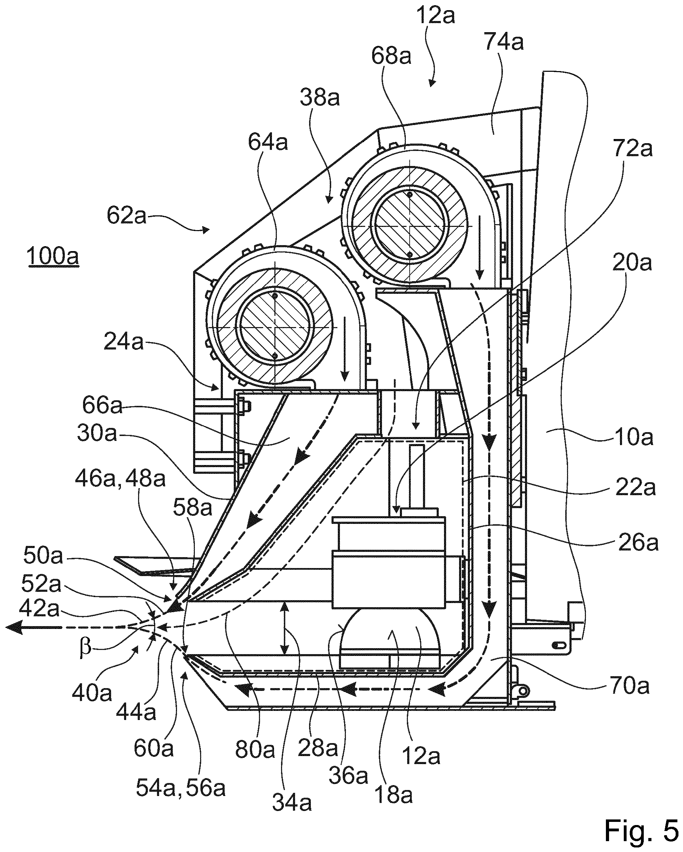

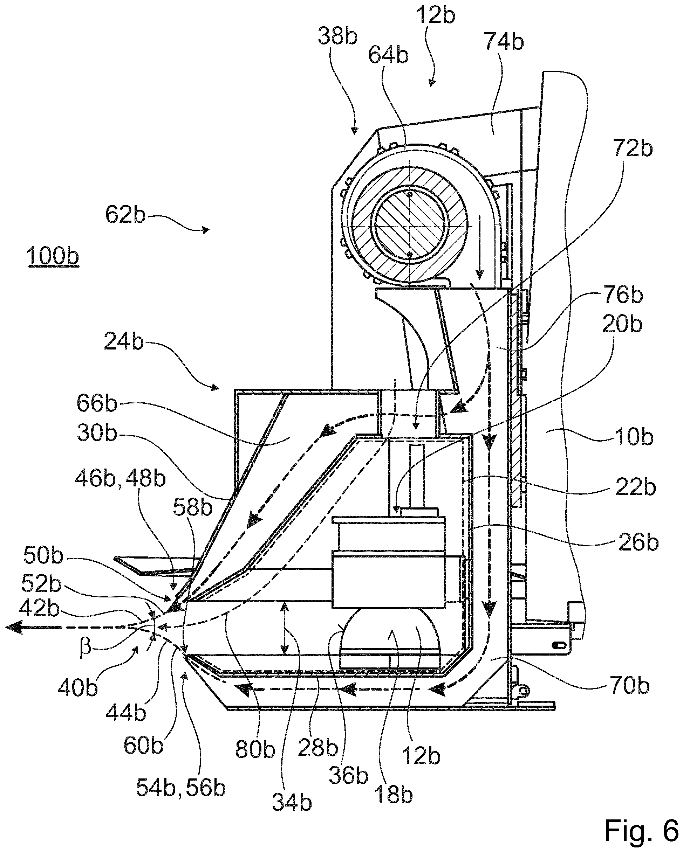

In Fig. 6 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 5, verwiesen werden kann. Zur Unterscheidung der Ausführungsbeispiele ist der Buchstabe a den Bezugszeichen des Ausführungsbeispiels in Fig. 1 bis 5 nachgestellt. In dem Ausführungsbeispiel der Fig. 6 ist der Buchstabe a durch den Buchstaben b ersetzt

Die Figur 6 zeigt ein zweites Ausführungsbeispiel einer erfindungsgemäßen Sensorschutzvorrichtung 14b. Die erfindungsgemäße Sensorschutzvorrichtung 14b ist dazu vorgesehen, die an einem Fahrzeug 10b angeordnete Sensoreinheit 12b zu schützen.

Die Sensorschutzvorrichtung 14b weist einen Innenraum 22b auf. Der Innenraum 22b der Sensorschutzvorrichtung 14b ist gegenüber einer Umgebung 100b zumindest teilweise abgetrennt. Die Sensorschutzvorrichtung 14b weist einen Sensoraufnahmebereich 20b auf. Der Sensoraufnahmebereich 20b ist in dem Innenraum 22b der Sensorschutzvorrichtung 14b angeordnet.

Die Sensorschutzvorrichtung 14b weist eine Gehäuseeinheit 24b auf. Die Gehäuseeinheit 24b definiert den Innenraum 22b. Ein Grundkörper 26b weist ein Innengehäuse 28b auf. Der Sensoraufnahmebereich 20b ist innerhalb des Innengehäuses 28b des Grundkörpers 26b der Gehäuseeinheit 24b angeordnet. Die Sensorschutzvorrichtung 14b weist eine Durchtrittsöffnung 34b auf. Die Durchtrittsöffnung 34b ist zu einer Kommunikation der Sensoreinheit 12b mit einer Umgebung 100b vorgesehen. Die Durchtrittsöffnung 34b ist durch die Gehäuseeinheit 24b begrenzt.

Die Sensorschutzvorrichtung 14b weist eine Sensorgebläsevorrichtung 38b auf. Die Sensorgebläsevorrichtung 38b ist dazu vorgesehen, wenigstens einen Fluidstrom 40b bereitzustellen. Die Sensorgebläsevorrichtung 38b ist dazu vorgesehen, im Bereich der Durchtrittsöffnung 34b einen von dem Sensoraufnahmebereich 20b weg gerichteten Fluidstrom zu erzeugen. Die Sensorgebläsevorrichtung 38b dazu vorgesehen ist, zwei Teilfluidströme 42b, 44b zu erzeugen. Die Teilfluidströme 42b, 44b sind jeweils dazu vorgesehen, einen Teil des von dem Fluidstrom 40b ausgebildeten Fluidvorhangs auszubilden, der die Durchtrittsöffnung 34b verschließt. Die Sensorgebläsevorrichtung 38b weist eine erste Düseneinheit 46b auf. Die erste Düseneinheit 46b ist zur Erzeugung des Fluidstroms 40b, vorgesehen. Die erste Düseneinheit 46b ist von dem Sensoraufnahmebereich 20b weg gerichtet. Die erste Düseneinheit 46b ist zur Erzeugung des ersten Teilfluidstroms 42b vorgesehen. Die Sensorgebläsevorrichtung 38b weist eine weitere Düseneinheit 54b auf. Die zweite Düseneinheit 54b ist zur Erzeugung des Fluidstroms 40b vorgesehen. Die Düseneinheit 54b ist von dem Sensoraufnahmebereich 20b weg gerichtet. Die zweite Düseneinheit 54b ist zur Erzeugung des ersten Teilfluidstroms 44b vorgesehen.

Die Sensorgebläsevorrichtung 38b weist ein Verdichtermodul 62b auf. Das Verdichtermodul 62b ist zur Erzeugung des Fluidstroms 40b vorgesehen. Im Unterschied zu dem ersten Ausführungsbeispiel weist das Verdichtermodul 62b lediglich einen Verdichter 64b auf. Der eine Verdichter ist zur Versorgung beider Düseneinheiten 46b, 54b mit einem Fluidstrom vorgesehen. Die Sensorgebläsevorrichtung weist neben zwei Fluidkanälen 66b, 70b, die zu den jeweiligen Düseneinheiten 46b, 54b führen, einen Verteilerfluidkanal 76b auf, der einen aus dem gemeinsamen Verdichter 64b austretenden Verdichterfluidstrom auf die beiden Fluidkanäle 66b, 70b aufteilt.

### Bezugszeichen

- 10: Fahrzeug
- 12: Sensoreinheit
- 14: Sensorschutzvorrichtung
- 16: Sensorkommunikationsebene
- 18: Sensoroberfläche
- 20: Sensoraufnahmebereich
- 22: Innenraum
- 24: Gehäuseeinheit
- 26: Grundkörper
- 28: Innengehäuse
- 30: Außengehäuse
- 32: Anbindungseinheit
- 34: Durchtrittsöffnung
- 36: Sensorebene
- 38: Sensorgebläsevorrichtung
- 40: Fluidstrom
- 42: Teilfluidstrom
- 44: Teilfluidstrom
- 46: Düseneinheit
- 48: Düsenelement
- 50: Düsenausgangsöffnung
- 52: Fluidaustrittsebene
- 54: Düseneinheit
- 56: Düsenelement
- 58: Düsenausgangsöffnung
- 60: Fluidaustrittsebene
- 62: Verdichtermodul
- 64: Verdichter
- 66: Fluidkanal
- 68: Verdichter
- 70: Fluidkanal
- 72: Strömungsausnehmung
- 74: Abdeckhaube
- 76: Verteilerfluidkanal

- 80: Fluidstrom

- 100: Umgebung

## Patentansprüche

1. Sensorschutzvorrichtung für eine Sensoreinheit (12a; 12b), insbesondere eine optische Sensoreinheit, mit einem Sensoraufnahmebereich (20a; 20b), der dazu vorgesehen ist, eine Sensoreinheit (12a; 12b) aufzunehmen, mit einer Gehäuseeinheit (24a; 24b), die den Sensoraufnahmebereich (20a; 20b) zumindest im Wesentlichen umgibt, wobei die Gehäuseeinheit (24a; 24b) zumindest eine Durchtrittsöffnung (34a; 34b) zu einer Kommunikation der Sensoreinheit (12a; 12b) mit einer Umgebung (100a; 100b) begrenzt und dazu in einer Sensorkommunikationsebene (16a; 16b) angeordnet ist, und mit zumindest einer Sensorgebläsevorrichtung (38a; 38b), die dazu vorgesehen ist, einen Fluidstrom (40a; 40b) bereitzustellen, **dadurch gekennzeichnet, dass** die Sensorgebläsevorrichtung (38a; 38b) dazu vorgesehen ist, im Bereich der Durchtrittsöffnung (34a; 34b) einen von dem Sensoraufnahmebereich (20a; 20b) weg gerichteten Fluidstrom zu erzeugen.

2. Sensorschutzvorrichtung nach Anspruch 1, **dadurch gekennzeichnet, dass** der von der Sensorgebläsevorrichtung (38a; 38b) erzeugte Fluidstrom (40a; 40b) dazu vorgesehen ist, einen Fluidvorhang auszubilden, der zumindest in einem Teilbereich quer zu der Durchtrittsöffnung (34a; 34b) verläuft und diese überdeckt.

3. Sensorschutzvorrichtung nach Anspruch 1 oder 2, **dadurch gekennzeichnet, dass** die Sensorgebläsevorrichtung (38a; 38b) dazu vorgesehen ist, zwei Teilfluidströme (42a, 44a; 42b, 44b) zu erzeugen, die jeweils dazu vorgesehen sind, einen Teil eines Fluidvorhangs auszubilden, der die Durchtrittsöffnung (34a; 34b) verschließt.

4. Sensorschutzvorrichtung nach einem der vorhergehenden Ansprüche, **dadurch gekennzeichnet, dass** die Sensorgebläsevorrichtung (38a; 38b) dazu vorgesehen ist, einen Fluidstrom (40a; 40b) zu erzeugen, der in einem Innenraum (22a; 22b) der Gehäuseeinheit (24a; 24b) gegenüber der Umgebung (100a; 100b) verringerten Druck erzeugt.

5. Sensorschutzvorrichtung nach einem der vorhergehenden Ansprüche, **dadurch gekennzeichnet, dass** die Sensorgebläsevorrichtung (38a; 38b) zumindest eine Düseneinheit (46a, 54a; 46b, 54b) aufweist, die auf einer ersten Seite oder einer zweiten Seite der Durchtrittsöffnung (34a; 34b) angeordnet und von dem Sensoraufnahmebereich (20a; 20b) weg gerichtet ist.

6. Sensorschutzvorrichtung nach einem der vorhergehenden Ansprüche, **dadurch gekennzeichnet, dass** die Sensorgebläsevorrichtung (38a; 38b) zumindest eine weitere Düseneinheit (54a; 54b) aufweist, die auf einer der ersten Düseneinheit (46a; 46b) gegenüberliegenden Seite der Durchtrittsöffnung (34a; 34b) angeordnet und von dem Sensoraufnahmebereich (20a; 20b) weg gerichtet ist.

7. Sensorschutzvorrichtung nach einem der vorhergehenden Ansprüche, **dadurch gekennzeichnet, dass** die Sensorgebläsevorrichtung (38a; 38b) zumindest eine Düseneinheit (46a, 54a; 46b, 54b) aufweist, die zumindest dazu vorgesehen ist, einen Fluidstrom (40a; 40b) zu erzeugen, der sich über einen Großteil, vorzugsweise über eine gesamte Quererstreckung der Durchtrittsöffnung (34a; 34b) erstreckt.

8. Sensorschutzvorrichtung nach einem der vorhergehenden Ansprüche, **dadurch gekennzeichnet, dass** die Sensorgebläsevorrichtung (38a; 38b) zumindest zwei Düseneinheiten (46a, 54a; 46b, 54b) aufweist, die dazu vorgesehen sind, einen Teilfluidstrom (42a, 44a; 42b, 44b) zu erzeugen, wobei die Teilfluidströme (42a, 44a; 42b, 44b) dazu vorgesehen sind, im Wesentlichen in der Sensorkommunikationsebene (16a; 16b) aufeinander zu treffen und einen gemeinsamen Fluidstrom (40a; 40b) ausbilden.

9. Sensorschutzvorrichtung nach einem der vorhergehenden Ansprüche, **dadurch gekennzeichnet, dass** die Sensorgebläsevorrichtung (38a; 38b) zumindest zwei Düseneinheiten (46a, 54a; 46b, 54b) aufweist, die jeweils eine Fluidaustrittsebene (52a, 60a; 52b, 60b) aufweisen, die einen Winkel α einschließen, der einen Wert zwischen 10 Grad und 70 Grad, bevorzugt zwischen 20 Grad und 50 Grad aufweist.

10. Sensorschutzvorrichtung nach einem der vorhergehenden Ansprüche, **dadurch gekennzeichnet, dass** die Sensorgebläsevorrichtung (38a; 38b) zumindest eine Düseneinheit (46a, 54a; 46b, 54b) aufweist, die ein als Spalt ausgebildetes Düsenelement (48a, 56a; 48b, 56b) aufweist, das sich über einen Großteil, vorzugsweise über eine gesamte Quererstreckung der Durchtrittsöffnung (34a; 34b) erstreckt.

11. Sensorschutzvorrichtung nach einem der vorhergehenden Ansprüche, **dadurch gekennzeichnet, dass** die Sensorgebläsevorrichtung (38a; 38b) zumindest eine Düseneinheit (46a, 54a; 46b, 54b) aufweist, die ein als Spalt ausgebildetes Düsenelement (48a, 56a; 48b, 56b) aufweist, des die Durchtrittsöffnung (34a; 34b) zu einer Seite begrenzt.

12. Sensorschutzvorrichtung nach einem der vorhergehenden Ansprüche, **dadurch gekennzeichnet, dass** die Sensorgebläsevorrichtung (38a; 38b) zwei Düseneinheiten (46a, 54a; 46b, 54b) aufweist, die die Durchtrittsöffnung (34a; 34b) begrenzen.

13. Sensorschutzvorrichtung nach einem der vorhergehenden Ansprüche, **dadurch gekennzeichnet, dass** die Sensorgebläsevorrichtung (38a; 38b) zumindest einen Verdichter (64a, 68a; 64b) aufweist, der über einen Fluidkanal (66a, 70a; 66a, 70b) strömungstechnisch mit der Düseneinheit (46a, 54a; 46b, 54b) verbunden ist.

14. Sensorschutzvorrichtung nach Anspruch 13, **dadurch gekennzeichnet, dass** die Sensorgebläsevorrichtung (38a) einen zweiten Verdichter (68a) aufweist, der über einen weiteren Fluidkanal (70a) strömungstechnisch mit der weiteren Düseneinheit (56a) verbunden ist.

15. Sensorschutzvorrichtung nach Anspruch 13 oder 14, **dadurch gekennzeichnet, dass** der zumindest eine Fluidkanal (66a, 70a; 66b, 70b, 76b) zumindest teilweise von der Gehäuseeinheit (24a; 24b) ausgebildet ist.

16. System aus einer Sensorschutzvorrichtung (14a; 14b) mit einem Sensoraufnahmebereich (20a; 20b) nach einem der vorhergehenden Ansprüche und einer Sensoreinheit (12a; 12b), die in dem Sensoraufnahmebereich (20a; 20b) angebunden ist.

17. Fahrzeug (10a) mit einem System aus einer Sensorschutzvorrichtung (14a; 14b) und einer Sensoreinheit (12a; 12b) nach Anspruch 16.
